# EUROPEAN PATENT APPLICATION

(11) **EP 2 535 599 A1**
(43) Date of publication of application: **19.12.2012**
(21) Application number: 12004507.5
(22) Date of filing: 14.06.2012
(51) Int. Cl.: F15B 1/10

(54) **Expansion tank with elastic devices**

(30) Priority: 17.06.2011 IT PD20110203
(71) Applicant: Gasparin, Giulia, 31030 Castello di Godego (TV) (IT)
(72) Inventor: Gasparin, Ruggero, 31030 Castello di Godego (TV) (IT)

(57) **Abstract**

This invention relates to an expansion tank where the action of countering the pressure in the water side of said tank is carried out by elastic devices different from the usual compressed air in the air side.

The object of this invention is a new expansion tank, and in particular a new elastic device joined to the expansion tank.

## Description

### Field of the invention

The field of the invention concerns closed expansion tanks usually used in closed hydraulic systems, which can be domestic heating systems, in boilers, etc.

### Prior art

The use of expansion tanks in many sectors, their purpose and the way they function is well known.

Their task is to absorb the thermal expansion of the carrier fluid in closed systems, or to maintain the liquid in a hydraulic circuit within a pre-set range of pressure, for various purposes.

Sometimes they are also used with the purpose of compensating for a sharp variation in the flow of liquid, and to avoid damage to the hydraulic circuit in which they are installed.

Their use has become consolidated over time.

One of the most widely used types of expansion tanks is composed of a tank, of course, which on the inside has two cavities divided by a partition made generally of a rubber membrane.

This partition is held along its perimeter either pinched, nipped or crimped between the edge of two half-shells attached opposite one another, which make up the outer envelope.

These two cavities, or chambers, are identified as the water side cavity and the air side cavity.

The water side, which is faces out, generally has a stub pipe for connecting it to the waterworks or plumbing.

The air side, on the other hand, has a valve for pressurising and recharging.

Generally, right from the start, after the construction of the expansion tank, the air side is filled to the pre-set pressure with air or another gas.

Afterwards, said tank should be painted in a coating line that dries the coated tank at high temperatures inside a drying oven.

An initial drawback concerns the expansion of the gas that fills the cavity filled with air or gas.

In fact, with the increase of the temperature the gas undergoes considerable expansion, which is in no way counterbalanced by a similar force, which is absent in the adjacent water side cavity.

The rubber partition, as a result of the thrust of the expansion of the gas, goes completely towards the empty cavity (water side), creating very pronounced bending at the retention edge.

This unusual strain can break the rubber partition.

One expedient for avoiding this above-mentioned strain is to fit the rubber partition with interspaced grooves near the bending zone, which by distancing this rubber partition from the interior surface of the water side half-shell, mollify and render the curvature, to which it is subject, less strong, by increasing the relative bending radius.

Moreover, the high air pressure in the air side allows for permeation through the rubber partition, in particular the oxygen molecule towards the water side, provoking the oxidation of the various metal parts present in the circuit of the hydraulic system.

Also after this permeation a period for reinstating the air is needed, to bring it back to the nominal pressure value set for the correct functioning of the system. This operation, very often simple and inexpensive, is not generally carried out by the system's maintenance personnel who prefer a radical, and more costly, replacement of the entire expansion tank claiming that it could be worn out. Finally, expansion tanks have to comply with regulations for pressurised equipment, especially for the pressure used, and which might be reached in the air side; therefore each new model or significant variants of an existing model have to be approved and pass numerous tests in order to obtain the certification for commercialisation.

To overcome all the above-mentioned drawbacks, currently the market has no alternative and, above all, offers nothing to solve this, so the situation is passively accepted by all the experts and engineers in the sector who see no solution to these drawbacks.

### Presentation of the invention

The object of this invention is a new and improved expansion tank that resolves all the drawbacks explained above.

A further purpose of this invention is to make available a new improved expansion tank that will not break due to the consequences of the high temperature in the manufacturing stage.

A further purpose of this invention is to make available a new improved expansion tank that eliminates or heavily limits the possibility of the permeation of the pressurised gas in the air side towards the water side.

Another purpose of this invention is to make available a new improved expansion tank that is practically free of maintenance and in particular does not require a periodic recharging of the pressurised gas.

A further purpose of this invention is to make available a new improved expansion tank that is reliable, inexpensive and that is also smaller than the standard expansion tank currently available on the market.

A further purpose of this invention is to make available a new improved expansion tank that does not need official approval, and which can be freely manufactured without having to comply with the regulations for pressurised equipment.

These and other objectives are all attained with the improved expansion tank, in accordance with the attached claims.

### Brief description of the diagrams

The technical characteristics of the invention, in line with the above-mentioned objectives, can be clearly seen in the claims below and its advantages will be further evident in the detailed description that follows, made with reference to the attached diagrams that represent an embodiment that is purely by way of example and in no way limited to it, where:

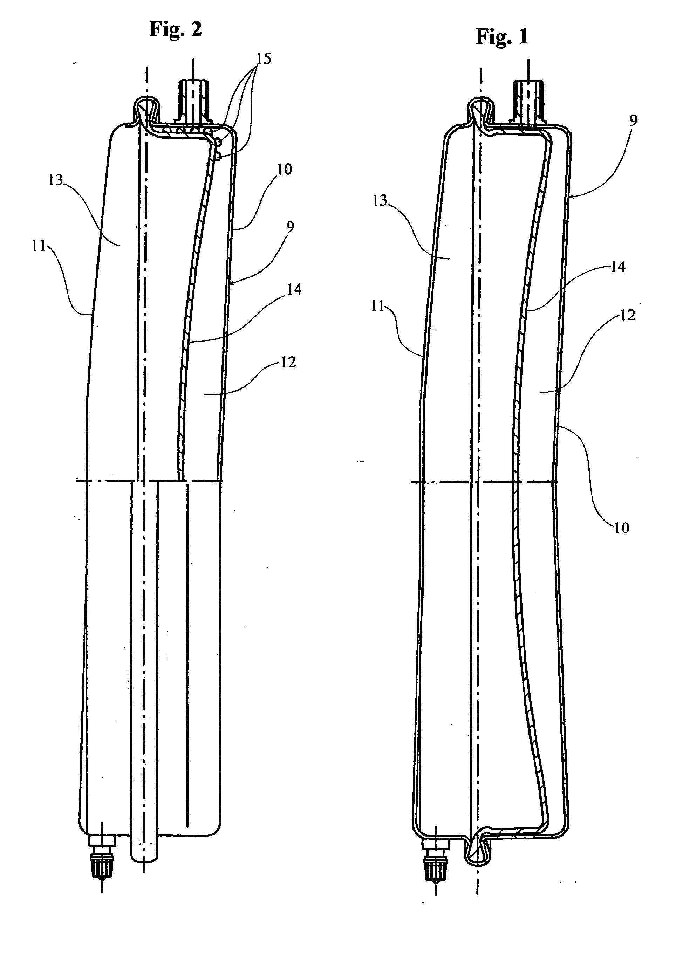

- Fig. 1 shows a cross section view of a well-known type of expansion tank;
- Fig. 2 show a partial cross section view of a well-known type of expansion tank with a device for overcoming one of the main drawbacks;

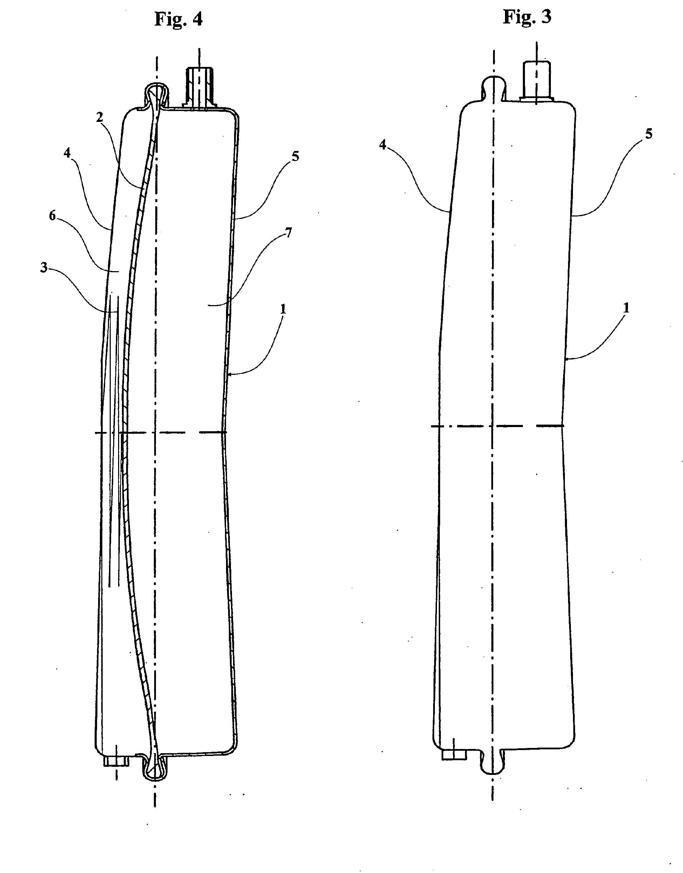

- Fig. 3 shows a side view of an improved expansion tank according to the invention;
- Fig. 4 shows a cross section view of an improved expansion tank according to the invention;

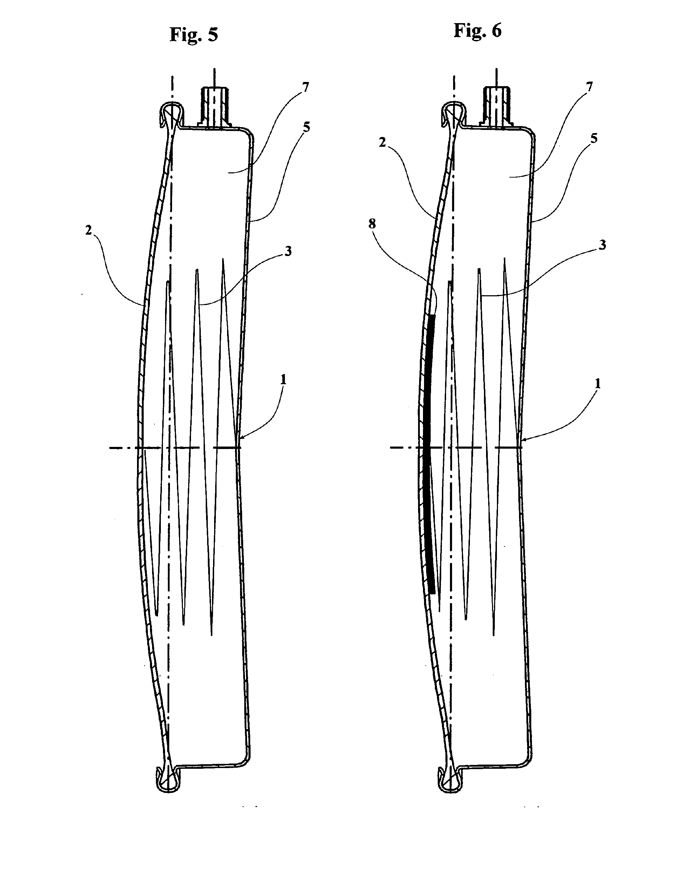

- Fig. 5 shows a cross section view of an improved expansion tank according to the invention in an alternative embodiment;

Fig. 6 shows the expansion tank of fig. 5 equipped with an element that improves it.

### Detailed description

A well-known type of expansion tank 9 is generally made of two half-shells 10, 11 reciprocally clamped together in an airtight manner or seam welded, and which hold a separation partition 14 in the middle, which establishes the water side 12 and the air side 13.

It should be noted that the air side half-shell 11 has to have a thick cross section because it is subject to the air side pre-charge pressure.

One expedient of the prior art for avoiding the abrupt and severe bending that the separation partition 14 can endure during its stay in the coating oven are the interspaced grooves 15 near the bending zone.

The improved expansion tank 1 according to the invention is to be used in all the products replacing the classic expansion tank 9.

In fact the plate data, the dimensions, and the size, and the performance of the invention are the same as or better than the tank that it would replace.

In particular the improved expansion tank 1 according to the invention provides for the rubber membrane 2 being countered in its movement by elastic devices 3 that are not a gaseous fluid.

These elastic devices 3 can be located in the air side 6 cavity or chamber and also in the water side 7 cavity or chamber, where by air side 6 cavity is meant the compartment defined the air side half-shell and the membrane 2, while by water side 7 cavity is meant the compartment defined by the water side 5 half-shell and the membrane 2.

The air side 4 half-shell therefore has only the function of countering the thrust of said elastic devices 3, when they are placed inside said air side, and therefore it is not necessary that the air side 6 chamber is airtight.

Another function of this air side 4 half-shell is to protect the integrity of the membrane 2 from any external stresses.

It is clear, therefore, that the cross section of the air side 4 half-shell for the reasons set out above can be considerably smaller than an air side 11 half shell for traditional purposes.

Whenever said elastic devices 3 are located in the water side 7 compartment, the air side 4 half-shell is not indispensable. It is clear, therefore, that the size of the new expansion tank 1, which is the object of the invention, can, with the same plate values, be roughly half the size of the corresponding expansion tank currently on the market; or, equivalently, with a size equal to that of the corresponding expansion tank on the market, it can have a nominal expansion capacity that is practically double.

Said elastic devices 3 can be beneficially configured as a thin coil spring.

In this way all the space inside the expansion tank 1, excluding the volume occupied by these elastic devices 3, becomes the nominal expansion capacity, or the plate value of the tank with an increase that reaches almost twice that of an expansion tank currently on the market.

This means, moreover, much lower costs than a classic expansion tank because with the available expansion volume being equal, and therefore the plate value, the improved expansion tank 1 according to the invention takes up much less space, costs proportionally less, and weighs half as much.

The object of the invention also has the advantage because it takes up less space in terms of operating and also for storing than the corresponding version of the expansion tank currently on the market.

Moreover, the improved expansion tank 1 is much more reliable because the membrane 2, not having been stressed by the initial passage inside the high temperature coating oven, missing the pressurised air in the air side 6 that, expanding because of the high temperature, and because the membrane 3 is not countered on the opposite water side 7, forces the membrane into sharp bending at the pinched, nipped or crimped perimeter along the edge of the two half-shells 4,5.

Beneficially these elastic devices 3 have a calibratable limitation in order to be able to precisely provide the performances of the tank plate, allowing a diversification of the performances only on the basis of the calibration of the maximum extension of the elastic device 3.

A further expedient for increasing the reliability of the invention is the use of an element 8 that enlarges the surface of the elastic devices 3 that acts on the membrane 2, thereby avoiding localised stress.

Conveniently said element 8 for enlarging the surface will be of a material, cross section, thickness that is related to the membrane 2 on which it acts, so as to avoid localised stress, but following and adapting to the form of the membrane 2, following the variation of its arrangement.

It is especially important that said enlargement element 8 has the capacity to follow, at least on its edges, the curvature that the membrane 2 assumes in the various load conditions.

It is clear that this type of expansion tank 1, configured according to the invention, has a pressure on the air side 6 that is never realised by the pressure of the fluid, because there is always an atmospheric pressure there.

This means that this expansion tank 1 is not one of those pressurised equipment regulated by the current directives, and that it can be freely manufactured without previous approval necessary for putting it on the market.

Even quite considerable modifications can be made without lengthy waiting and expensive legal and/or bureaucratic requirements.

## Claims

1. Expansion tank containing at least a cavity on the water side (7) delimited by at least an elastic membrane (2) held, with a waterproof seal, by at least a half-shell on the water side (5) **characterised by** the fact that to said elastic membrane (2) are joined elastic devices (3) to counter the thrust of the liquid and/or gasses in the water side (7), said elastic devices (3) not being composed of a pressurised fluid.

2. Expansion tank according to claim 1 which includes also the half-shell on the air side (4) for realising a cavity on the air side (6) and said elastic devices (3) are present in the air side (6).

3. Expansion tank according to the previous claim **characterised by** the fact that the half-shell on the air side (4) has the function of countering the thrust of said elastic devices (3).

4. Expansion tank according to claim 1 where said elastic devices (3) are present in the cavity on the water side (7).

5. Expansion tank according to the previous claim **characterised by** the fact that it comprises a half-shell on the air side (4) that has the function of protecting the integrity of the elastic membrane (2).

6. Expansion tank according to one of the previous claims **characterised by** the fact that said elastic devices (3) can be calibrated and/or provided with an adjustable range with a maximum limit.

7. Expansion tank according to one of the previous claims where said elastic devices (3) act on said membrane (2) by means of an element for enlarging (8) the surface under stress, which prevents localised stress on the membrane (2).

8. Expansion tank according to the previous claim **characterised by** the fact that said enlargement element (8) is a flexible material, at least at the ends, capable of matching the curved shape that the membrane (2) assumes.

9. Expansion tank according to one of the previous claims **characterised by** the fact that the pressure on the air side (6) is atmospheric pressure.

10. Expansion tank according to one of the previous claims **characterised by** the fact that said elastic devices (3) are a coil spring.
